# EUROPEAN PATENT SPECIFICATION

(11) **EP 1 816 408 B1**
(45) Date of publication and mention of the grant of the patent: **21.10.2009**
(21) Application number: 07100880.9
(22) Date of filing: 22.01.2007
(51) Int. Cl.: F24F 1/02

(54) **Conditioning device of the free cooling type**
Klimatisierungsvorrichtung mit freier Kühlung
Dispositif de conditionnement de type de refroidissement naturel

(30) Priority: 07.02.2006 IT PD20060015 U
(43) Date of publication of application: 08.08.2007
(73) Proprietor: Emerson Network Power S.R.L., 35028 Piove di Sacco (PD) (IT)
(72) Inventor: Lazzarato, Moreno, 35020 Brugine (PD) (IT)
(74) Representative: Modiano, Micaela Nadia

(56) References cited:
- EP-A- 1 217 879
- EP-A2- 0 257 017
- EP-A2- 1 310 744
- DE-A1- 3 027 447
- US-A- 4 519 539
- US-A- 6 038 879
- US-A1- 2004 148 948

## Description

The present invention relates to a conditioning device of the free cooling type.

Air conditioning devices provided with the option known as "free cooling" are currently known in the field of climate control of enclosed spaces ranging from industrial facilities to telephone exchanges to offices to private dwellings and the like.

The free cooling option is based on the ability of the climate control unit to use, for the conditioning of an enclosed space, air which arrives from outside when said air has an enthalpy value which is higher than that of the air of the internal space.

Free cooling allows considerable energy saving on the part of the user as well as a healthier management of the air of the internal space, which is replaced appropriately by activating free cooling.

Known types of free cooling conditioning device are generally installed externally or are wall-mounted with respect to the walls which form the space to be climate-controlled.

These known conditioning devices are constituted generally by a box-like body which contains:
- a first main fan for aspirating air from the enclosed space or from outside;
- a shutter, arranged upstream of the first fan, for selecting the air stream aspirated by the first fan: ambient air for a first direct-cooling conditioning mode or external air for a second free cooling conditioning mode;
- an evaporator, to which the first fan sends the aspirated air to introduce it in the enclosed space to be climate-controlled;
- a condenser associated with said evaporator;
- a second fan for the flow of air over said condenser;
- a compressor which is associated with the condenser and the evaporator so as to form a refrigeration circuit for cooling the aspirated air.

In the first conditioning mode, the refrigeration circuit is active, the shutter closes a first port for aspirating air from outside and opens a second port for aspirating air from the enclosed space, forming a first intake channel which connects said second port to the first fan, from which the air reaches the evaporator and from there returns to the space to be climate-controlled.

At the same time, the second fan also is active and aspirates air from outside in order to send it to the condenser of the refrigeration circuit.

The transition from this first mode to the second free cooling operating mode occurs by tilting the shutter, which is arranged in a second configuration which is adapted to close the first intake channel between the second port, which is open onto the inside environment, and the first fan, and to open a second channel between a third port, which is open onto the outside, and the first fan, and a third channel between the second port and a fourth port, which also is open onto the outside.

In this second operating mode, the second fan is off, the refrigeration circuit is inactive, warm air flows from the internal environment outward through the third channel, and the fan aspirates cool air from the outside in order to introduce it into the environment by means of the second channel.

Although these known conditioning devices are highly appreciated because of the saving on consumption that they can achieve, together with the quality of their climate control, in the free cooling operating mode they typically have a certain slowness in the outflow of warm air inside the enclosed space, due both to the relatively convoluted path that said warm air must follow to arrive outside and because it is pushed outward only by the pressure determined by the inflow of the air from the outside by means of the first fan and by its natural rise.

A cooling device having the features set forth in preamble of claim 1 known from US 2004/0148948 A1.

The aim of the present invention is to provide a conditioning device of the free cooling type which is capable of obviating the drawbacks revealed by known types.

Within this aim, an object of the present invention is to provide a conditioning device which is capable of increasing the efficiency and effectiveness of the free cooling operating mode.

Another object of the present invention is to provide a conditioning device which is not less compact than known types of device.

Another object of the present invention is to provide a conditioning device of the free cooling type which can be manufactured cheaply with known systems and technologies.

This aim and these and other objects, which will become better apparent hereinafter, are achieved by a conditioning device of the free cooling type, according to the invention; that has the features of claim 1.

Further characteristics and advantages of the invention will become better apparent from the following detailed description of a preferred but not exclusive embodiment thereof, illustrated by way of non-limiting example in the accompanying drawings, wherein:
Figure 1 is a schematic sectional side view of a device according to the invention in a first configuration for a first operating mode;
Figure 2 is a schematic sectional side view of a device according to the invention in a second configuration for a second operating mode;

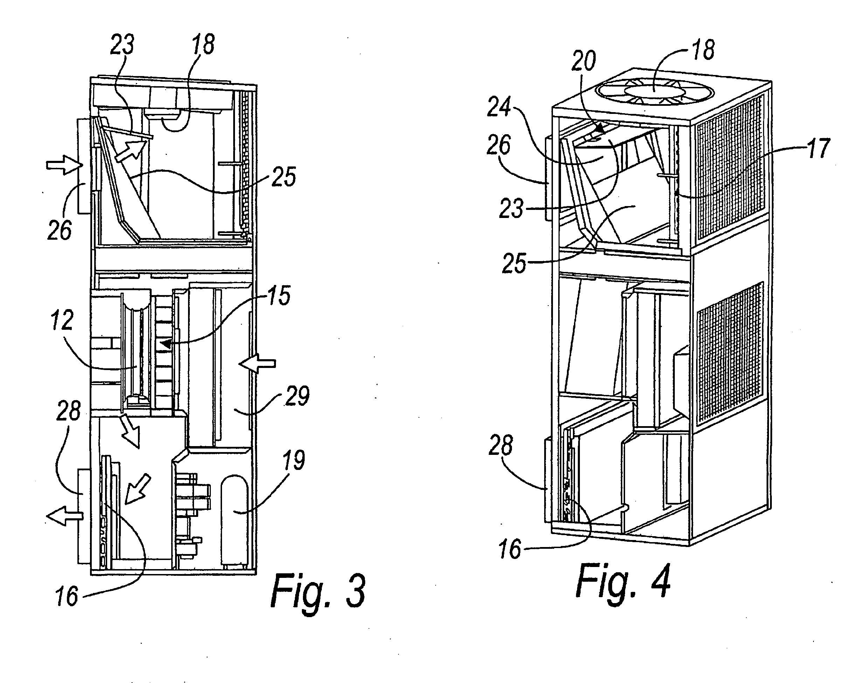

Figure 3 is a schematic sectional side view of a device according to the invention in the same configuration as in Figure 2, for a third operating mode;
Figure 4 is a perspective view of the device according to the invention in the configuration of Figure 3;
Figure 5 is a schematic perspective view of a detail of a device according to the invention.

With reference to the figures, a conditioning device of the free cooling type according to the invention is generally designated by the reference numeral 10.

The conditioning device 10 comprises, within a box-like containment body 11:
- a first main fan 12 for aspirating air from the enclosed space 13 or from the outside 14;
- at least one shutter 15, upstream of the first fan 12, for selecting the air stream aspirated by the first fan 12: either ambient air for a first direct-cooling conditioning mode or external air for a second free cooling conditioning mode;
- an evaporator 16, to which the first fan 12 sends the aspirated air in order to introduce it in the enclosed space 13 to be climate-controlled;
- a condenser 17 associated or operatively connected with the evaporator 16;
- a second fan 18 for passing the flow of air over the condenser 17;
- a compressor 19, which is associated or operatively connected (i.e. connected for controlled, cooperating operation) with the condenser 17 and the evaporator 16 to form a refrigeration circuit for cooling the aspirated air;
- and a second shutter 20, which is adapted to redirect the stream of air in output from the enclosed space 13 either toward the second fan 18, when the device 10 operates in the second free cooling mode, or toward the first shutter 15, which is at least partly open toward the first fan 12, for the aspiration on the part of said first fan at least partly of ambient air, in the first cooling mode with ambient air recirculation.

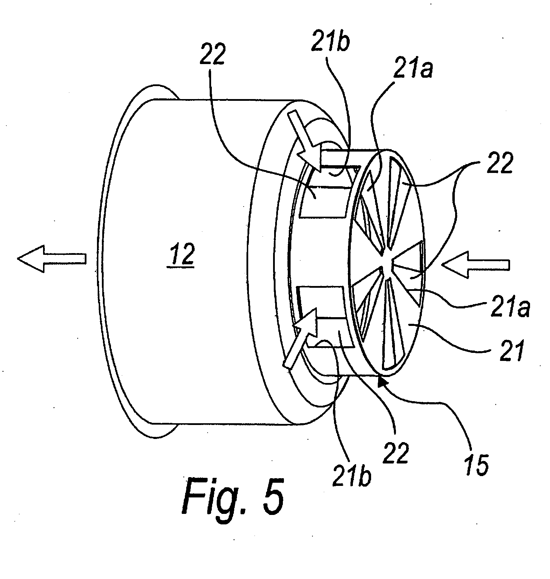

The first shutter 15 is of the type with baskets, shown schematically in Figure 5 and constituted by a first basket 21 and by at least one complementarily shaped second basket 22 inserted within it.

The first basket 21 opens onto the first fan 12 and is provided with first front ports 21a on its bottom and second lateral ports 21 b on its lateral surface.

The second basket 22, which is internal and is a single one in the embodiment of the invention described here, forms the flow control means of the first shutter 15, by being connected to rotation means for rotation with respect to the first basket 21 and by being contoured so that portions of its bottom and its lateral surface alternately block the first front ports 21a and the second lateral ports 21b; the second basket 22 can be actuated so as to provide selectively one of the following three configurations:
- a first configuration, in which the first ports 21a are closed and the second ports 21b are open;
- a second configuration, in which the first ports 21a are open and the second ports 21b are closed;
- a third configuration, in which the first ports 21 a and the second ports 21b are partially open.

The first configuration allows the operation of the device 10 in the first mode for cooling with ambient air recirculation and active refrigeration circuit.

The second configuration is designed for the operation of the device 10 in the second free cooling mode, by connecting the outside to the first fan 12.

The second shutter 20 is provided by a louver 23, which is arranged so as to open/close a corresponding opening 24 which is formed on a redirection wall 25 which is arranged in front of a first port 26 for the outflow of air from the enclosed space 13.

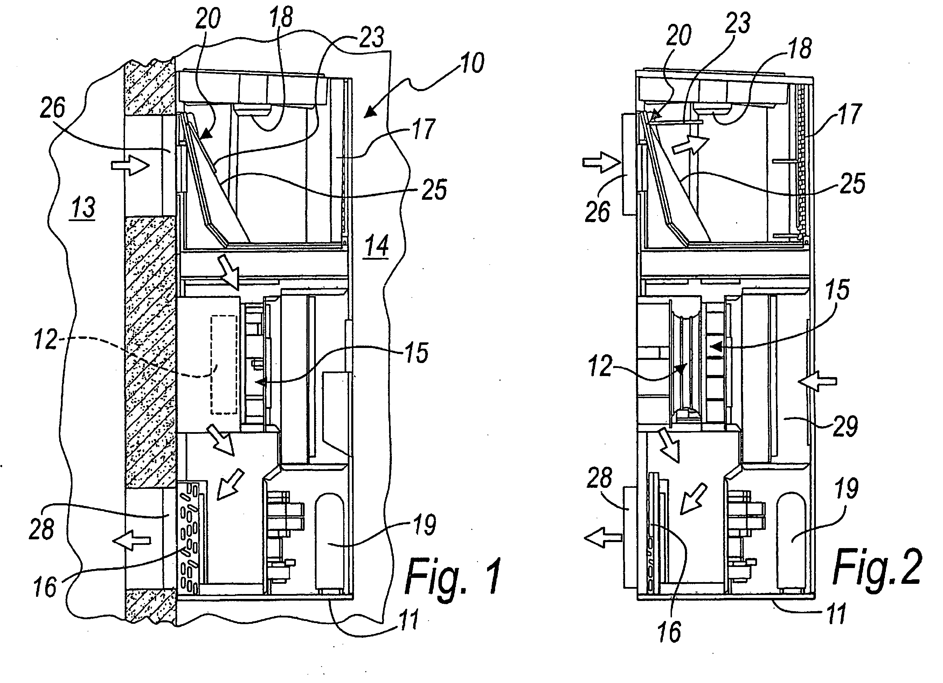

The redirection wall 25 is inclined so that when the opening 24 is closed the air is redirected toward the first shutter 15 and the first fan 12, as shown by way of example in Figure 1.

If the louver 23 is open, the internal air can pass through the opening 24 and flow out through the second fan 18.

The louver 23 is actuated by electromechanical movement means, not shown for the sake of simplicity, which are actuated by an electronic control unit, which also manages the first shutter 15 and the two fans 12 and 18.

The device 10 according to the invention is therefore capable of operating in three modes.

In a first mode, for direct-cooling conditioning, i.e., with the refrigeration circuit active:
- the first shutter 15 is in the first configuration, in which the first ports 21a are closed and the second ports 21b are open (Figure 1), and the first fan 12 draws air from the enclosed space 13 through the first port 26;
- the second shutter 20 is closed, and the air aspirated by the first port 26 is redirected entirely toward the first fan 12 and from there toward the evaporator 16, from which the cooled air then reaches the enclosed space 13 by means of a second port 28 for emission into the environment;
- the refrigeration circuit is active, and so is the second fan 18, which forces the flow of air from outside to outside over the condenser 17.

In a second mode for free cooling conditioning, i.e., with the refrigeration circuit off:
- the first shutter 15 is in the second configuration, in which the first ports 21a are open and the second ports 21b are closed, and the first fan 12 aspirates air from the outside 14 through a third port 29, which is open onto the outside;
- the second shutter 20 is open and the air rises from the first port 26 and is redirected entirely toward the second fan 18, which is inactive and by means of which it arrives outside;
- the refrigeration circuit is off, and so is the second fan 18, as mentioned.
In a third mode for forced free cooling conditioning:
- the first shutter 15 is in the second configuration, in which the first ports 21a are open and the second ports 21b are closed, and the first fan 12 aspirates air from the outside 14 through the third port 29 which is open onto the outside;
- the second shutter 20 is open, and the air rises through the first port 26 toward the second fan 18, which is active and by means of which it is forced outside;
- the refrigeration circuit is off, but the second fan 18 is active.

This third mode therefore allows to obviate the drawback of known types of device, since thanks to the opening 24 which connects the first port 26 (for the outflow of the air from the enclosed space 13) to the second fan 18, it is able to increase the efficiency and effectiveness of the free cooling operating mode, simply by activating the second fan 18 with the refrigeration circuit off.

In this third mode, the second fan 18 is adapted to aspirate air from the enclosed space 13, accelerating its replacement.

This is allowed by the particular structure of the device 10 according to the invention, which differently from known types of device has the port for the outflow of air from the enclosed space, i.e., the first port 26, connected by means of the second shutter 20 to the air passage chamber to which both the condenser 17 and the second fan 18 lead.

In practice it has been found that the invention thus described solves the problems noted in known types of free cooling conditioning device.

In particular, the present invention provides a conditioning device which is capable of increasing the efficiency and effectiveness of the free cooling operating mode with respect to known devices.

Moreover, the present invention provides a conditioning device which is not less compact than known types of device.

Moreover, the present invention provides a conditioning device of the free cooling type which can be manufactured cheaply with known systems and technologies.

In practice, the materials employed, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A conditioning device of the free cooling type, comprising, inside a box-like containment body (11):
- a first main fan (12) for aspirating air from an enclosed space (13) or from the outside (14);
- an evaporator (16), that is reached by aspirated air to be introduced in the enclosed space (13) to be climate-controlled;
- a condenser (17) associated with said evaporator (16);
- a second fan (18) for the flow of air over said condenser (17);
- a compressor (19), which is associated with said condenser (17) and said evaporator (16) to form a refrigeration circuit for cooling the aspirated air;
- a first shutter (15), located upstream of the first fan (12), for selecting the stream of air aspirated by the first fan (12), either ambient air, for a direct-cooling conditioning mode, or external air for a free cooling conditioning mode; and
- a second shutter (20), which is adapted to redirect the stream of air in output from the enclosed space (13) either toward said second fan (18), when the device (10) operates in the free cooling mode, or toward said first shutter (15), which is at least partly open to let air pass toward the first fan (12), for aspiration on the part of said first fan (12) at least partly of ambient air, in the direct- cooling conditioning mode with ambient air recirculation,
**said device being characterized in that** said first fan (12) is arranged upstream of said evaporator (16) so as to send thereto the aspirated air in order to introduce it in the enclosed space (13) to be climate-controlled,
**and in that** said second fan (18) is *arranged at an upper end of said box-like body (11)* and upstream of said condenser (17), so that in a free cooling mode, in which the second fan (18) is inactive, the refrigeration circuit is off and the second shutter (20) is open, ambient air raises from a first port (26) of the box-like body (11) toward the second fan (18) by means of which the ambient air arrives outside (14), and so that in a further forced free cooling mode, in which the second fan (18) is active, the refrigeration circuit is off and the second shutter (20) is open, the flow of ambient air outflowing from said first port (26) is forced by said second fan (18).

2. The conditioning device according to claim 1, **characterized in that** said first shutter (15) is of the basket type and is constituted by a first basket (21) and by at least one complementarily shaped second basket (22) which is inserted inside it, said first basket (21) being open onto the first fan (12) and being provided with first front ports (21a) on its bottom and second lateral ports (21b) on its lateral surface, said at least one second internal basket (22) being adapted to form means for flow control of the first shutter (15), being connected to means for rotating with respect to the first basket (21) and being shaped so as to have portions of its bottom and its lateral surface which affect alternately the first front ports (21a) and the second lateral ports (21b).

3. The device according to one or more of the preceding claims, **characterized in that** said first shutter (15) is constituted by two baskets (21, 22), said second basket (22) being actuatable so as to provide selectively one among the following three configurations:
- a first configuration, in which the first ports (21a) are closed and the second ports (21b) are open;
- a second configuration, in which the first ports (21a) are open and the second ports (21b) are closed;
- a third configuration, in which the first ports (21a) and the second ports (21b) are partially open,
said first configuration allowing the operation of the device (10) in the direct- cooling conditioning mode with ambient air recirculation and active refrigeration circuit, said second configuration being suitable for the operation of the device (10) in the second free cooling mode, connecting the outside to said first fan (12).

4. The device according to one or more of the preceding claims, **characterized in that** said second shutter (20) is formed by a louver (23) which is arranged so as to open/close a corresponding opening (24) which is formed in a redirection wall (25) arranged in front of a first port (26) for the outflow of air from the enclosed space (13).

5. The device according to one or more of the preceding claims, **characterized in that** said redirection wall (25) is inclined so that when the opening (24) is closed, the air is redirected toward the first shutter (15) and toward the first fan (12), whereas when the louver (23) is open the internal air can pass through the opening (24) toward the outside through said second fan (18).

6. The device according to one or more of the preceding claims, **characterized in that** said louver (23) is actuated by electromechanical movement means, which are actuated by an electronic control unit which also manages said first shutter (15) and said two fans (12, 18).

7. The device according to one or more of the preceding claims, **characterized in that** it can operate selectively in one of three modes:
- a first direct-cooling conditioning mode;
- a second free cooling conditioning mode;
- a third forced free cooling conditioning mode.

8. The device according to any of the claims 2- 7, **characterized in that** in said direct-cooling conditioning mode, i.e., with the refrigeration circuit active:
- the first shutter (15) is in said first configuration, in which the first ports (21a) are closed and the second ports (21b) are open, and the first fan (12) draws air from the enclosed space (13) through the first port (26);
- the second shutter (20) is closed, and the air aspirated by the first port (26) is redirected entirely toward the first fan (12) and from there toward the evaporator (16), from which the cooled air then reaches the enclosed space (13) by means of a second port (28) for emission into the environment;
- the refrigeration circuit is active, and so is the second fan (18), which forces the flow of air from outside to outside over the condenser (17).

9. The device according to any of the claims 2-8, **characterized in that** in said free cooling conditioning mode, i.e., with the refrigeration circuit off:
- the first shutter (15) is in the second configuration, in which the first ports (21a) are open and the second ports (21b) are closed, and the first fan (12) aspirates air from the outside (14) through a third port (29), which is open onto the outside;
- the second shutter (20) is open and the air rises from the first port (26) and is redirected entirely toward the second fan (18), which is inactive and by means of which it arrives outside;
- the refrigeration circuit is off, and so is the second fan (18).

10. The device according to any of the claims 2-9, **characterized in that** in said forced free cooling conditioning mode:
- the first shutter (15) is in the second configuration, in which the first ports (21a) are open and the second ports (21b) are closed, and the first fan (12) aspirates air from the outside (14) through the third port (29) which is open onto the outside;
- the second shutter (20) is open, and the air rises through the first port (26) toward the second fan (18), which is active and by means of which it is forced outside;
- the refrigeration circuit is off.

11. The device according to one or more of the preceding claims, **characterized in that** in said forced free cooling mode said opening (24) connects the first port (26), for the outflow of the air from the enclosed space (13), to the second fan (18), increasing the efficiency and effectiveness of the free cooling operating mode and increasing the rate of air replacement in the enclosed space (13).

## Patentansprüche

1. Eine Klimatisierungsvorrichtung mit freier Kühlung, die innerhalb eines kastenähnlichen Einschlusskörpers (11) Folgendes umfasst:
- einen ersten Hauptventilator (12) zum Ansaugen von Luft aus einem geschlossenen Raum (13) oder von außen (14),
- einen Verdunster (16), der von angesaugter Luft, die in den zu klimatisierenden geschlossenen Raum (13) eingeführt werden soll, erreicht wird,
- einen Kondensator (17), der mit dem Verdunster (16) verküpft ist,
- einen zweiten Ventilator (18) für die Strömung von Luft über den Kondensator (17),
- einen Kompressor (19), der mit dem Kondensator (17) und dem Verdunster (16) verknüpft ist, um einen Kühlkreislauf zum Kühlen der angesaugten Luft zu bilden,
- eine erste Klappe (15), die stromaufwärts vom ersten Ventilator (12) angeordnet ist, zur Auswahl des Luftstroms, der vom ersten Ventilator (12) angesaugt wird, und zwar entweder Umgebungsluft für einen Direktkühlung-Klimatisierungsmodus oder Außenluft für einen Freikühlung-Klimatisierungsmodus, und
- eine zweite Klappe (20), die ausgebildet ist, um den Luftstrom im Ausgang von dem geschlossenen Raum (13) entweder zu dem zweiten Ventilator (18) hin umzuleiten, wenn die Vorrichtung (10) in dem Freikühlung-Modus arbeitet, oder zur ersten Klappe (15) hin, die zumindest teilweise offen ist, um Luft zum ersten Ventilator (12) hin strömen zu lassen, zum Ansaugen von mindestens teilweise Umgebungsluft durch den ersten Ventilator (12) in dem Direktkühlung-Klimatisierungsmodus mit Umgebungsluft-Rückführung,
wobei die Vorrichtung **dadurch gekennzeichnet ist, dass** der erste Ventilator (12) stromaufwärts von dem Verdunster (16) angeordnet ist, um dorthin die angesaugte Luft zu leiten, um sie in den zu klimatisierenden geschlossenen Raum (13) einzulassen,
und **dadurch**, dass der zweite Ventilator (18) an einem oberen Ende des kastenähnlichen Körpers (11) und stromaufwärts von dem Kondensator (17) angeordnet ist, so dass in einem Freikühlung-Modus, in dem der zweite Ventilator (18) inaktiv ist, der Kühlkreislauf abgeschaltet ist und die zweite Klappe (20) offen ist, Umgebungsluft von einer ersten Öffnung (26) des kastenähnlichen Körpers (11) zum zweiten Ventilator (18) hin aufsteigt, wodurch die Umgebungsluft nach außen (14) gelangt; und so, dass in einem weiteren erzwungenen Freikühlung-Modus, in dem der zweite Ventilator (18) aktiv ist, der Kühlkreislauf abgeschaltet ist und die zweite Klappe (20) offen ist, die Strömung von Umgebungsluft, welche aus der ersten Öffnung (26) heraus strömt, von dem zweiten Ventilator (18) erzwungen wird.

2. Die Klimatisierungsvorrichtung gemäß Anspruch 1, **dadurch gekennzeichnet, dass** die erste Klappe (15) vom Korbtyp ist und aus einem ersten Korb (21) und mindestens einem komplementär geformten zweiten Korb (22) besteht, der in ihn eingesetzt wird, wobei der erste Korb (21) zum ersten Ventilator (12) hin offen ist und an seiner Unterseite mit ersten vorderen Öffnungen (21a) und an seiner lateralen Oberfläche mit zweiten seitlichen Öffnungen (21b) versehen ist, wobei der mindestens eine zweite innere Korb (22) ausgebildet ist, um Mittel zur Strömungssteuerung der ersten Klappe (15) zu bilden, und mit Mitteln zur Drehung gegenüber dem ersten Korb (21) ausgestattet ist und so geformt ist, dass Bereiche seiner unteren und seiner lateralen Oberfläche alternierend die ersten vorderen Öffnungen (21a) und die zweiten seitlichen Öffnungen (21b) beeinflussen.

3. Die Vorrichtung gemäß einem oder mehreren der obigen Ansprüche, **dadurch gekennzeichnet, dass** die erste Klappe (15) aus zwei Körben (21, 22) besteht, wobei der zweite Korb (22) so betätigt werden kann, dass er wahlweise eine der folgenden drei Anordnungen bereitstellt:
- eine erste Anordnung, in der die ersten Öffnungen (21a) geschlossen sind und die zweiten Öffnungen (21b) offen sind,
- eine zweite Anordnung, in der die ersten Öffnungen (21a) offen sind und die zweiten Öffnungen (21b) geschlossen sind,
- eine dritte Anordnung, in der die ersten Öffnungen (21a) und die zweiten Öffnungen (21b) teilweise offen sind,
wobei die erste Anordnung den Betrieb der Vorrichtung (10) im Direktkühlung-Klimatisierungsmodus mit Umgebungsluft-Rückführung und einem aktiven Kühlkreislauf ermöglicht, wobei die zweite Anordnung für den Betrieb der Vorrichtung (10) im zweiten Freikühlung-Modus geeignet ist, welcher die Außenseite mit dem ersten Ventilator (12) verbindet.

4. Die Vorrichtung gemäß einem oder mehreren der obigen Ansprüche, **dadurch gekennzeichnet, dass** die zweite Klappe (20) von einem Luftleitblech (23) gebildet wird, das so angeordnet ist, dass es eine entsprechende Öffnung (24) öffnet/schließt, die in einer Ablenkwand (25) gebildet ist, welche vor einer ersten Öffnung (26) für das Herausströmen von Luft aus dem geschlossenen Raum (13) angeordnet ist.

5. Die Vorrichtung gemäß einem oder mehreren der obigen Ansprüche, **dadurch gekennzeichnet, dass** die Ablenkwand (25) geneigt ist, so dass, wenn die Öffnung (24) geschlossen wird, die Luft zur ersten Klappe (15) und zum ersten Ventilator (12) hin umgelenkt wird, während, wenn das Luftleitblech (23) offen ist, die Innenluft durch die Öffnung (24) und durch den zweiten Ventilator (18) zur Außenseite dringen kann.

6. Die Vorrichtung gemäß einem oder mehreren der obigen Ansprüche, **dadurch gekennzeichnet, dass** das Luftleitblech (23) von elektromechanischen Bewegungsmitteln betätigt wird, die von einer elektronischen Steuereinheit betätigt werden, welche auch die erste Klappe (15) und die zwei Ventilatoren (12, 18) steuert.

7. Die Vorrichtung gemäß einem oder mehreren der obigen Ansprüche, **dadurch gekennzeichnet, dass** sie selektiv in einer von drei Betriebsarten arbeiten kann:
- einem ersten Direktkühlung- Klimatisierungsmodus,
- einem zweiten Freikühlung-Klimatisierungsmodus,
- einem dritten erzwungenen Freikühlung-Klimatisierungsmodus.

8. Die Vorrichtung gemäß einem beliebigen der Ansprüche 2-7, **dadurch gekennzeichnet, dass** im Direktkühlung-Klimatisierungsmodus, das heißt, mit aktivem Kühlkreislauf:
- die erste Klappe (15) sich in der ersten Anordnung befindet, in der die ersten Öffnungen (21a) geschlossen sind und die zweiten Öffnungen (21b) offen sind, und der erste Ventilator (12) saugt Luft aus dem geschlossenen Raum (13) durch die erste Öffnung (26) an,
- die zweite Klappe (20) geschlossen ist und die durch die erste Öffnung (26) angesaugte Luft vollständig zum ersten Ventilator (12) und von dort zum Verdunster (16) hin umgelenkt wird, von wo die gekühlte Luft dann über eine zweite Öffnung (28) zur Abgabe an die Umgebung den geschlossenen Raum (13) erreicht,
- der zweite Kühlkreislauf aktiv ist und ebenso der zweite Ventilator (18), der die Luftströmung von außen nach außen über den Kondensator (17) erzwingt.

9. Die Vorrichtung gemäß einem beliebigen der Ansprüche 2-8, **dadurch gekennzeichnet, dass** in dem Freikühlung-Klimatisierungsmodus, das heißt mit abgeschaltetem Kühlkreislauf,
- die erste Klappe (15) sich in der zweiten Anordnung befindet, in der die ersten Öffnungen (21a) offen sind und die zweiten Öffnungen (21b) geschlossen sind, und der erste Ventilator (12) saugt Luft von außen (14) durch eine dritte Öffnung (29) an, die nach außen hin offen ist,
- die zweite Klappe (20) offen ist und die Luft von der ersten Öffnung (26) aufsteigt und vollständig zum zweiten Ventilator (18) hin umgelenkt wird, der inaktiv ist und wodurch sie nach außen gelangt,
- der Kühlkreislauf ausgeschaltet ist, und ebenso der zweite Ventilator (18).

10. Die Vorrichtung gemäß einem beliebigen der Ansprüche 2-9, **dadurch gekennzeichnet, dass** in dem erzwungenen Freikühlung-Klimatisierungsmodus
- die erste Klappe (15) sich in der zweiten Anordnung befindet, in der die ersten Öffnungen (21a) offen sind und die zweiten Öffnungen (21b) geschlossen sind, und der erste Ventilator (12) saugt Luft von außen (14) durch die dritte Öffnung (29) an, die nach außen hin offen ist,
- die zweite Klappe (20) offen ist und die Luft durch die erste Öffnung (26) zum zweiten Ventilator (18) hin aufsteigt, der aktiv ist und wodurch sie nach außen gedrückt wird,
- der Kühlkreislauf ausgeschaltet ist.

11. Die Vorrichtung gemäß einem oder mehreren der obigen Ansprüche, **dadurch gekennzeichnet, dass** in dem erzwungenen Freikühlung-Klimatisierungsmodus die Öffnung (24) zum Hinausströmen der Luft aus dem geschlossenen Raum (13) die erste Öffnung (26) mit dem zweiten Ventilator (18) verbindet, was die Effizienz und Effektivität des Freikühlung-Klimatisierungsmodus sowie die Geschwindigkeit des Luftaustauschs im geschlossenen Raum (13) erhöht.

## Revendications

1. Dispositif de conditionnement du type à refroidissement naturel, comportant, à l'intérieur d'un corps de confinement de type caisson (11),
- un premier ventilateur principal (12) pour aspirer de l'air à partir d'un espace clos (13) ou à partir de l'extérieur (14),
- un évaporateur (16), qui reçoit de l'air aspiré à introduire dans l'espace clos (13) pour être conditionné
- un condensateur (17) associé audit évaporateur (16),
- un second ventilateur (18) pour la circulation d'air au-dessus dudit condensateur (17),
- un compresseur (19), lequel est associé audit condensateur (17) et audit évaporateur (16) pour former un circuit de réfrigération afin de refroidir l'air aspiré,
- un premier volet d'obturation (15), localisé en amont du premier ventilateur (12), pour sélectionner le flux d'air aspiré par le premier ventilateur (12), soit l'air ambiant, pour un mode de conditionnement à refroidissement direct, soit l'air extérieur, pour un mode de conditionnement à refroidissement naturel, et
- un second volet d'obturation (20), lequel est adapté pour rediriger le flux d'air en sortie depuis l'espace clos (13) soit vers ledit second ventilateur (18), lorsque le dispositif (10) fonctionne dans le mode à refroidissement naturel, soit vers ledit premier volet d'obturation (15), lequel est au moins partiellement ouvert pour laisser passer l'air en direction du premier ventilateur (12), en vue d'une aspiration sur la partie dudit premier ventilateur (12) au moins partiellement de l'air ambiant, dans le mode de conditionnement à refroidissement direct avec une recirculation d'air ambiant,
ledit dispositif étant **caractérisé en ce que** ledit premier ventilateur (12) est agencé en amont dudit évaporateur (16) de manière à envoyer à celui-ci l'air aspiré afin de l'introduire dans l'espace clos (13) pour le conditionner,
et **en ce que** ledit second ventilateur (18) est agencé à une extrémité supérieure dudit corps de type caisson (11) et en amont dudit condensateur (17), de sorte que dans un mode à refroidissement naturel, dans lequel le second ventilateur (18) est inactif, le circuit de réfrigération est hors tension et le second volet d'obturation (20) est ouvert, l'air ambiant jaillit d'un premier orifice (26) du corps de type caisson (11) vers le second ventilateur (18) par l'intermédiaire duquel l'air ambiant arrive à l'extérieur (14), et de sorte que dans un mode à refroidissement naturel davantage forcé, dans lequel le second ventilateur (18) est actif, le circuit de réfrigération est hors tension et le second volet d'obturation (20) est ouvert, la circulation d'air ambiant s'écoulant depuis ledit premier orifice (26) est forcée par ledit second ventilateur (18).

2. Dispositif de conditionnement selon la revendication 1, **caractérisé en ce que** ledit premier volet d'obturation (15) est du type panier et est constitué d'un premier panier (21) et d'au moins un second panier de forme complémentaire (22) qui est inséré dans celui-ci, ledit premier panier (21) étant ouvert sur le premier ventilateur (12) et étant muni de premiers orifices avant (21a) sur sa partie inférieure et de deuxièmes orifices latéraux (21b) sur sa surface latérale, ledit au moins un second panier interne (22) étant adapté pour former des moyens pour commander le flux du premier volet d'obturation (15), étant connecté à des moyens de mise en rotation par rapport au premier panier (21) et étant conformé de manière à avoir des parties de sa surface inférieure et de sa surface latérale qui affectent alternativement les premiers orifices avant (21a) et les deuxièmes orifices latéraux (21b).

3. Dispositif selon une ou plusieurs des revendications précédentes, **caractérisé en ce que** ledit premier volet d'obturation (15) est constitué par deux paniers (21, 22), ledit second panier (22) étant actionnable de manière à fournir sélectivement une configuration parmi les trois configurations suivantes :
- une première configuration, dans laquelle les premiers orifices (21a) sont fermés et les deuxièmes orifices (21b) sont ouverts,
- une deuxième configuration, dans laquelle les premiers orifices (21a) sont ouverts et les deuxièmes orifices (21b) sont fermés,
- une troisième configuration, dans laquelle les premiers orifices (21a) et les deuxièmes orifices (21b) sont partiellement ouverts,
ladite première configuration permettant le fonctionnement du dispositif (10) dans le mode de conditionnement à refroidissement direct à l'aide d'un circuit de réfrigération actif et de recirculation de l'air ambiant, ladite deuxième configuration étant appropriée pour le fonctionnement du dispositif (10) dans le second mode à refroidissement naturel, reliant l'extérieur audit premier ventilateur (12).

4. Dispositif selon une ou plusieurs des revendications précédentes, **caractérisé en ce que** ledit second volet d'obturation (20) est formé par un louvre (23) qui est agencé de manière à ouvrir/fermer une ouverture correspondante (24) qui est formée dans une paroi de redirection (25) agencée à l'avant d'un premier orifice (26) pour le débit d'air depuis l'espace clos (13).

5. Dispositif selon une ou plusieurs des revendications précédentes, **caractérisé en ce que** ladite paroi de redirection (25) est inclinée de sorte que lorsque l'ouverture (24) est fermée, l'air est redirigé vers le premier volet d'obturation (15) et vers le premier ventilateur (12), alors que lorsque le louvre (23) est ouvert, l'air interne peut passer à travers l'ouverture (24) vers l'extérieur via ledit second ventilateur (18).

6. Dispositif selon une ou plusieurs des revendications précédentes, **caractérisé en ce que** ledit louvre (23) est actionné par des moyens à mouvement électromécanique, lesquels sont actionnés par une unité de commande électronique qui gère également ledit premier volet d'obturation (15) et lesdits deux ventilateurs (12, 18).

7. Dispositif selon une ou plusieurs des revendications précédentes, **caractérisé en ce qu'**il peut fonctionner sélectivement dans l'un des trois modes suivants :
- un premier mode de conditionnement à refroidissement direct,
- un deuxième mode de conditionnement à refroidissement naturel,
- un troisième mode de conditionnement à refroidissement naturel forcé.

8. Dispositif selon l'une quelconque des revendications 2 à 7, **caractérisé en ce que** dans ledit mode de conditionnement à refroidissement direct, c'est-à-dire avec le circuit de réfrigération actif :
- le premier volet d'obturation (15) est dans ladite première configuration, dans laquelle les premiers orifices (21a) sont fermés et les deuxièmes orifices (21b) sont ouverts, et le premier ventilateur (12) extrait de l'air de l'espace clos (13) via le premier orifice (26),
- le second volet d'obturation (20) est fermé, et l'air aspiré par le premier orifice (26) est redirigé entièrement vers le premier ventilateur (12) et depuis celui-ci vers l'évaporateur (16), à partir duquel l'air refroidi arrive ensuite dans l'espace clos (13) par l'intermédiaire d'un deuxième orifice (28) en vue de son émission dans l'environnement,
- le circuit de réfrigération est actif, ainsi que le second ventilateur (18), lequel force la circulation d'air depuis l'extérieur vers l'extérieur au-dessus du condensateur (17).

9. Dispositif selon l'une quelconque des revendications 2 à 8, **caractérisé en ce que** dans ledit mode de conditionnement à refroidissement naturel, c'est-à-dire avec le circuit de réfrigération étant mis hors tension :
- le premier volet d'obturation (15) est dans la deuxième configuration, dans laquelle les premiers orifices (21a) sont ouverts et les deuxièmes orifices (21b) sont fermés, et le premier ventilateur (12) aspire de l'air depuis l'extérieur (14) via un troisième orifice (29), lequel est ouvert sur l'extérieur,
- le second volet d'obturation (20) est ouvert et l'air provient du premier orifice (26) et est redirigé entièrement vers le second ventilateur (18), lequel est inactif et par l'intermédiaire duquel l'air arrive à l'extérieur,
- le circuit de réfrigération est hors tension, ainsi que le second ventilateur (18).

10. Dispositif selon l'une quelconque des revendications 2 à 9, **caractérisé en ce que** dans ledit mode de conditionnement à refroidissement naturel forcé :
- le premier volet d'obturation (15) est dans la deuxième configuration, dans laquelle les premiers orifices (21a) sont ouverts et les deuxièmes orifices (21b) sont fermés, et le premier ventilateur (12) aspire de l'air depuis l'extérieur (14) via un troisième orifice (29), lequel est ouvert sur l'extérieur,
- le second volet d'obturation (20) est ouvert et l'air traverse le premier orifice (26) vers le second ventilateur (18), lequel est actif et par l'intermédiaire duquel il est forcé vers l'extérieur,
- le circuit de réfrigération est hors tension.

11. Dispositif selon une ou plusieurs des revendications précédentes, **caractérisé en ce que** dans ledit mode à refroidissement naturel forcé, ladite ouverture (24) connecte le premier orifice (26), pour la circulation de l'air depuis l'espace clos (13), vers le second ventilateur (18), augmentant l'efficacité et les performances du mode de fonctionnement à refroidissement naturel et augmentant la fréquence du renouvellement d'air dans l'espace clos (13).
